# EUROPEAN PATENT APPLICATION

(11) **EP 3 367 208 A1**
(43) Date of publication of application: **29.08.2018**
(21) Application number: 18158477.2
(22) Date of filing: 23.02.2018
(51) Int. Cl.: G06F 1/16, H04M 1/02, G02F 1/133

(54) **ELECTRONIC DEVICE INCLUDING DISPLAY WITH ROUNDED CORNERS**

(30) Priority: 25.02.2017 KR 20170025145
(71) Applicant: Samsung Electronics Co., Ltd., Suwon-si, Gyeonggi-do 16677 (KR)
(72) Inventor: Park, Jung Sik, Suwon-si 16682 (KR); Choi, Seung Ki, Suwon-si 16683 (KR); Kwak, Woon Geun, Seongnam-si 13588 (KR); Cha, Do Hun, Yongin-si 16839 (KR); Byeon, Hyung Sup, Suwon-si 16512 (KR); Lee, So Young, Gwacheon-si 13835 (KR); Cho, Chi Hyun, Yongin-si 17106 (KR); Heo, Chang Ryong, Suwon-si 16664 (KR)
(74) Representative: Nederlandsch Octrooibureau

(57) **Abstract**

An electronic device is disclosed herein, including a processor and a display panel operatively coupled to the processor, the display panel including an active area having an arrangement of a plurality of pixels, and an inactive area in which no pixels are arranged, wherein a circumference of the active area and a contour of the display panel form a substantially rectangular shape including at least one curved corner, and wherein a curve forming any one corner of the contour of the display panel includes a larger average radius of curvature than a curve forming any one corner of the circumference of the active area.

## Description

### CLAIM OF PRIORITY

This application claims the benefit under a Korean patent application filed on February 25, 2017 in the Korean Intellectual Property Office and assigned Serial number 10-2017-0025145, the entire disclosure of which is hereby incorporated by reference.

### TECHNICAL FIELD

Embodiments disclosed herein relate to an electronic device including a display with rounded corners.

### BACKGROUND

Recently, portable electronic devices including displays (such as smartphones, wearable devices, or the like) have been widely adopted. The display of the portable electronic device may be implemented using a touch screen display having a touch panel. The touch screen display may serve as an input device for receiving a user inputs, as well as functioning as a visual display device.

The size of the display mounted on such portable electronic devices (e.g., smartphone) have generally increased from 3 inches to 5 inches corner-to-corner, or even more depending on user demand. As the size of the display increases, an entire front surface of the electronic device may be occupied by the display.

### SUMMARY

Aspects of the present disclosure are to address at least the above-mentioned problems and/or provide at least the benefits described below. Accordingly, an aspect of the present disclosure is to maximize the area occupied by a display on a front surface and/or a side surface of an electronic device by employing a display panel having a rounded rectangular shape.

In accordance with an aspect of the present disclosure, an electronic device is disclosed including a processor and a display panel operatively coupled to the processor, the display panel including an active area having an arrangement of a plurality of pixels, and an inactive area in which no pixels are arranged, wherein a circumference of the active area and a contour of the display panel form a substantially rectangular shape including at least one curved corner, and wherein a curve forming any one corner of the contour of the display panel includes a larger average radius of curvature than a curve forming any one corner of the circumference of the active area.

In accordance with an aspect of the present disclosure, an electronic device is disclosed including a processor, a display panel operatively coupled to the processor, the display panel including an active area having an arrangement of a plurality of pixels, and an inactive area in which no pixels are arranged, a gate driver electrically coupled with the plurality of pixels, an emission driver electrically coupled with the plurality of pixels, and an electrical path configured to electrically couple at least one of the gate driver and the emission driver to at least a part of the plurality of pixels, wherein at least one transistor is disposed on the electrical path, wherein the active area is substantially rectangular and includes a first edge extending in a first direction, a second edge extending in a second direction perpendicular to the first direction, and a first curve connecting the first edge and the second edge, wherein the inactive area at least partially surrounds the active area, and wherein the at least one transistor is disposed in a region of the inactive area surrounded by the first curve, an extension line of the first side, and an extension line of the second side.

According to embodiments disclosed herein, by employing a rounded rectangular display panel with curved corners, it is possible to maximize the area occupied by a display on a front surface and/or a side surface of an electronic device, thereby providing a more aesthetic impression to a user. In addition, the present disclosure may provide various effects that are directly or indirectly recognized.

Other aspects, benefits, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and benefits of certain embodiments of the present disclosure will be more apparent from the following description taken in conjunction with the accompanying drawings, in which:
FIG. 1 illustrates an electronic device according to various embodiments;
FIG. 2 is a block diagram of an electronic device according to various embodiments;
FIG. 3 illustrates external appearances of electronic devices according to various embodiments;
FIG. 4 is an exploded perspective view of an electronic device according to an embodiment;
FIG. 5 illustrates a stack structure of a display according to an embodiment;
FIG. 6 illustrates an upper front area of an electronic device according to an embodiment;
FIG. 7 is a block diagram of an electronic device according to an embodiment;
FIG. 8A illustrates a lower left area of an electronic device according to an embodiment;
FIG. 8B illustrates a lower left area of an electronic device according to another embodiment; and
FIG. 9 illustrates a view for explaining effects of the present disclosure.

Throughout the drawings, it should be noted that like reference numbers are used to depict the same or similar elements, features, and structures.

### DETAILED DESCRIPTION

Hereinafter, various embodiments of the present disclosure may be described with reference to accompanying drawings. Accordingly, those of ordinary skill in the art will recognize that modification, equivalent, and/or alternative on the various embodiments described herein can be variously made without departing from the present disclosure. With regard to description of drawings, similar elements may be marked by similar reference numerals.

In this disclosure, the expressions "have", "may have", "include" and "comprise", or "may include" and "may comprise" used herein indicate existence of corresponding features (e.g., elements such as numeric values, functions, operations, or components) but do not exclude presence of additional features.

In this disclosure, the expressions "A or B", "at least one of A or/and B", or "one or more of A or/and B", and the like may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used in this disclosure may be used to refer to various elements regardless of the order and/or the priority and to distinguish the relevant elements from other elements, but do not limit the elements. For example, "a first user device" and "a second user device" indicate different user devices regardless of the order or priority. For example, without departing the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it may be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

According to the situation, the expression "configured to" used in this disclosure may be used as, for example, the expression "suitable for", "having the capacity to", "designed to", "adapted to", "made to", or "capable of'. The term "configured to" must not mean only "specifically designed to" in hardware. Instead, the expression "a device configured to" may mean that the device is "capable of' operating together with another device or other components. For example, a "processor configured to (or set to) perform A, B, and C" may mean a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

Terms used in this disclosure are used to describe specified embodiments and are not intended to limit the present disclosure. The terms of a singular form may include plural forms unless otherwise specified. All the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal unless expressly so defined in various embodiments of this disclosure. In some cases, even if terms are terms which are defined in this disclosure, they may not be interpreted to exclude embodiments of this disclosure.

An electronic device according to various embodiments of this disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. According to various embodiments, the wearable device may include at least one of an accessory type (e.g., watches, rings, bracelets, anklets, necklaces, glasses, contact lens, or head-mounted-devices (HMDs), a fabric or garment-integrated type (e.g., an electronic apparel), a body-attached type (e.g., a skin pad or tattoos), or a bio-implantable type (e.g., an implantable circuit).

According to various embodiments, the electronic device may be a home appliance. The home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSync™, Apple TV™, or Google TV™), game consoles (e.g., Xbox™ or PlayStation™), electronic dictionaries, electronic keys, camcorders, electronic picture frames, and the like.

According to another embodiment, an electronic device may include at least one of various medical devices (e.g., various portable medical measurement devices (e.g., a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation devices, Global Navigation Satellite System (GNSS), event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), points of sales (POSs) of stores, or internet of things (e.g., light bulbs, various sensors, electric or gas meters, sprinkler devices, fire alarms, thermostats, street lamps, toasters, exercise equipment, hot water tanks, heaters, boilers, and the like).

According to an embodiment, the electronic device may include at least one of parts of furniture or buildings/structures, electronic boards, electronic signature receiving devices, projectors, or various measuring instruments (e.g., water meters, electricity meters, gas meters, or wave meters, and the like). According to various embodiments, the electronic device may be one of the above-described devices or a combination thereof. An electronic device according to an embodiment may be a flexible electronic device. Furthermore, an electronic device according to an embodiment of this disclosure may not be limited to the above-described electronic devices and may include other electronic devices and new electronic devices according to the development of technologies.

Hereinafter, electronic devices according to various embodiments will be described with reference to the accompanying drawings. In this disclosure, the term "user" may refer to a person who uses an electronic device or may refer to a device (e.g., an artificial intelligence electronic device) that uses the electronic device.

FIG. lillustrates an electronic device, according to various embodiments.

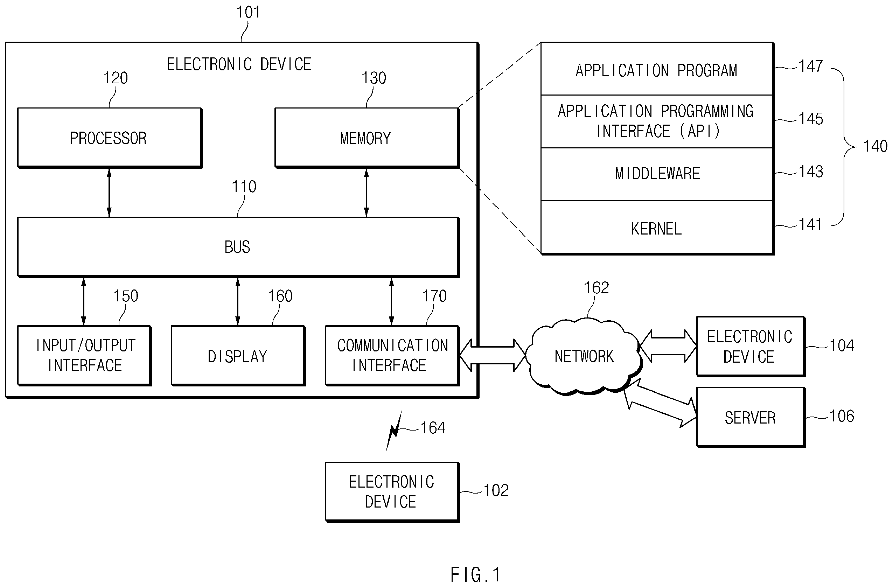

Referring to FIG. 1, according to various embodiments, an electronic device 101, a first electronic device 102, a second electronic device 104, or a server 106 may be connected each other over a network162 or a short range communication 164. The electronic device 101 may include a bus 110, a processor 120, a memory 130, an input/output interface 150, a display 160, and a communication interface 170. According to an embodiment, the electronic device 101 may not include at least one of the above-described elements or may further include other element(s).

For example, the bus 110 may interconnect the above-described elements 110 to 170 and may include a circuit for conveying communications (e.g., a control message and/or data) among the above-described elements.

The processor 120 may include one or more of a central processing unit (CPU), an application processor (AP), or a communication processor (CP). For example, the processor 120 may perform an arithmetic operation or data processing associated with control and/or communication of at least other elements of the electronic device 101.

The memory 130 may include a volatile and/or nonvolatile memory. For example, the memory 130 may store instructions or data associated with at least one other element(s) of the electronic device 101. According to an embodiment, the memory 130 may store software and/or a program 140. The program 140 may include, for example, a kernel 141, a middleware 143, an application programming interface (API) 145, and/or an application program (or "an application") 147. At least a part of the kernel 141, the middleware 143, or the API 145 may be referred to as an "operating system (OS)".

For example, the kernel 141 may control or manage system resources (e.g., the bus 110, the processor 120, the memory 130, and the like) that are used to execute operations or functions of other programs (e.g., the middleware 143, the API 145, and the application program 147). Furthermore, the kernel 141 may provide an interface that allows the middleware 143, the API 145, or the application program 147 to access discrete elements of the electronic device 101 so as to control or manage system resources.

The middleware 143 may perform, for example, a mediation role such that the API 145 or the application program 147 communicates with the kernel 141 to exchange data.

Furthermore, the middleware 143 may process task requests received from the application program 147 according to a priority. For example, the middleware 143 may assign the priority, which makes it possible to use a system resource (e.g., the bus 110, the processor 120, the memory 130, or the like) of the electronic device 101, to at least one of the application program 147. For example, the middleware 143 may process the one or more task requests according to the priority assigned to the at least one, which makes it possible to perform scheduling or load balancing on the one or more task requests.

The API 145 may be, for example, an interface through which the application program 147 controls a function provided by the kernel 141 or the middleware 143, and may include, for example, at least one interface or function (e.g., an instruction) for a file control, a window control, image processing, a character control, or the like.

The input/output interface 150 may play a role, for example, of an interface which transmits an instruction or data input from a user or another external device, to other element(s) of the electronic device 101. Furthermore, the input/output interface 150 may output an instruction or data, received from other element(s) of the electronic device 101, to a user or another external device.

The display 160 may include, for example, a liquid crystal display (LCD), a light-emitting diode (LED) display, an organic LED (OLED) display, a microelectromechanical systems (MEMS) display, or an electronic paper display. The display 160 may display, for example, various contents (e.g., a text, an image, a video, an icon, a symbol, and the like) to a user. The display 160 may include a touch screen and may receive, for example, a touch, gesture, proximity, or hovering input using an electronic pen or a part of a user's body.

For example, the communication interface 170 may establish communication between the electronic device 101 and an external device (e.g., the first electronic device 102, the second electronic device 104, or the server 106). For example, the communication interface 170 may be connected to the network 162 over wireless communication or wired communication to communicate with the external device (e.g., the second electronic device 104 or the server 106). The communication interface 170 may include circuitry for generating communicative signals responsive to instructions from the processor 120, an antenna for wirelessly broadcasting those signals to external devices, and/or physical connectors for wire-based communicative coupling with external devices. The wireless communication may use at least one of, for example, long-term evolution (LTE), LTE Advanced (LTE-A), Code Division Multiple Access (CDMA), Wideband CDMA (WCDMA), Universal Mobile Telecommunications System (UMTS), Wireless Broadband (WiBro), Global System for Mobile Communications (GSM), or the like, as cellular communication protocol. Furthermore, the wireless communication may include, for example, the short range communication 164. The short range communication 164 may include at least one of wireless fidelity (Wi-Fi), light fidelity (LiFi), Bluetooth, near field communication (NFC), magnetic stripe transmission (MST), a global navigation satellite system (GNSS), or the like.

The MST may generate a pulse in response to transmission data using an electromagnetic signal, and the pulse may generate a magnetic field signal. The electronic device 101 may transfer the magnetic field signal to point of sale (POS), and the POS may detect the magnetic field signal using a MST reader. The POS may recover the data by converting the detected magnetic field signal to an electrical signal.

The GNSS may include at least one of, for example, a global positioning system (GPS), a global navigation satellite system (Glonass), a Beidou navigation satellite system (hereinafter referred to as "Beidou"), or an European global satellite-based navigation system (hereinafter referred to as "Galileo") based on an available region, a bandwidth, or the like. Hereinafter, in this disclosure, "GPS" and "GNSS" may be interchangeably used.

The wired communication may include at least one of, for example, a universal serial bus (USB), a high definition multimedia interface (HDMI), a recommended standard-232 (RS-232), a plain old telephone service (POTS), or the like. The network 162 may include at least one of telecommunications networks, for example, a computer network (e.g., LAN or WAN), an Internet, or a telephone network.

Each of the first and second electronic devices 102 and 104 may be a device of which the type is different from or the same as that of the electronic device 101. According to an embodiment, the server 106 may include a group of one or more servers. According to various embodiments, all or a portion of operations that the electronic device 101 will perform may be executed by another or plural electronic devices (e.g., the first electronic device 102, the second electronic device 104 or the server 106). According to an embodiment, in the case where the electronic device 101 executes any function or service automatically or in response to a request, the electronic device 101 may not perform the function or the service internally, but, alternatively additionally, it may request at least a portion of a function associated with the electronic device 101 from another device (e.g., the electronic device 102 or 104 or the server 106). The other electronic device may execute the requested function or additional function and may transmit the execution result to the electronic device 101. The electronic device 101 may provide the requested function or service using the received result or may additionally process the received result to provide the requested function or service. To this end, for example, cloud computing, distributed computing, or client-server computing may be used.

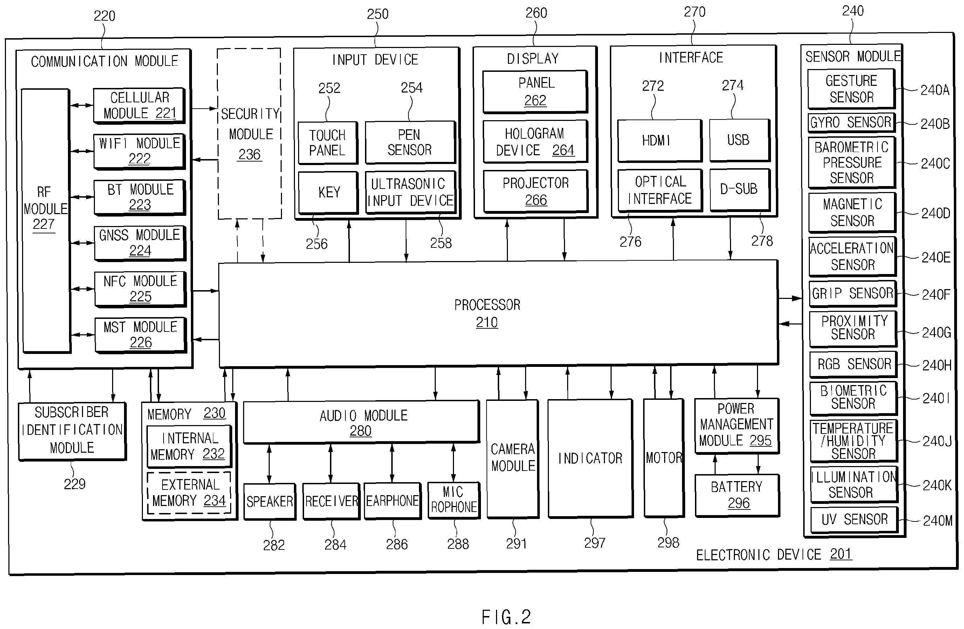

FIG. 2 illustrates a block diagram of an electronic device, according to various embodiments.

Referring to FIG. 2, an electronic device 201 may include, for example, all or a part of the electronic device 101 illustrated in FIG. 1. The electronic device 201 may include one or more processors (e.g., an application processor (AP)) 210, a communication module 220, a subscriber identification module 229, a memory 230, a sensor module 240, an input device 250, a display 260, an interface 270, an audio module 280, a camera module 291, a power management module 295, a battery 296, an indicator 297, and a motor 298.

The processor 210 may drive, for example, an operating system (OS) or an application to control a plurality of hardware or software elements connected to the processor 210 and may process and compute a variety of data. For example, the processor 210 may be implemented with a System on Chip (SoC). According to an embodiment, the processor 210 may further include a graphic processing unit (GPU) and/or an image signal processor. The processor 210 may include at least a part (e.g., a cellular module 221) of elements illustrated in FIG. 2. The processor 210 may load an instruction or data, which is received from at least one of other elements (e.g., a nonvolatile memory), into a volatile memory and process the loaded instruction or data. The processor 210 may store a variety of data in the nonvolatile memory.

The communication module 220 may be configured the same as or similar to the communication interface 170 of FIG. 1. The communication module 220 may include the cellular module 221, a Wi-Fi module 222, a Bluetooth (BT) module 223, a GNSS module 224(e.g., a GPS module, a Glonass module, a Beidou module, or a Galileo module), a near field communication (NFC) module 225, a MST module 226 and a radio frequency (RF) module 227. The communication module 220 may include circuitry for generating communicative signals based on instructions received from the processor 210, an antenna for broadcasting the generated signals wirelessly to external devices, and/or physical connectors for wire-based transmission of the generated signals to external devices.

The cellular module 221 may provide, for example, voice communication, video communication, a character service, an Internet service, or the like over a communication network. According to an embodiment, the cellular module 221 may perform discrimination and authentication of the electronic device 201 within a communication network by using the subscriber identification module (e.g., a SIM card) 229. According to an embodiment, the cellular module 221 may perform at least a portion of functions that the processor 210 provides. According to an embodiment, the cellular module 221 may include a communication processor (CP).

Each of the Wi-Fi module 222, the BT module 223, the GNSS module 224, the NFC module 225, or the MST module 226 may include a processor for processing data exchanged through a corresponding module, for example. According to an embodiment, at least a part (e.g., two or more) of the cellular module 221, the Wi-Fi module 222, the BT module 223, the GNSS module 224, the NFC module 225, or the MST module 226 may be included within one Integrated Circuit (IC) or an IC package.

For example, the RF module 227 may transmit and receive a communication signal (e.g., an RF signal). For example, the RF module 227 may include a transceiver, a power amplifier module (PAM), a frequency filter, a low noise amplifier (LNA), an antenna, or the like. According to another embodiment, at least one of the cellular module 221, the Wi-Fi module 222, the BT module 223, the GNSS module 224, the NFC module 225, or the MST module 226may transmit and receive an RF signal through a separate RF module.

The subscriber identification module 229 may include, for example, a card and/or embedded SIM that includes a subscriber identification module and may include unique identify information (e.g., integrated circuit card identifier (ICCID)) or subscriber information (e.g., integrated mobile subscriber identity (IMSI)).

The memory 230 (e.g., the memory 130) may include an internal memory 232 or an external memory 234. For example, the internal memory 232 may include at least one of a volatile memory (e.g., a dynamic random access memory (DRAM), a static RAM (SRAM), a synchronous DRAM (SDRAM), or the like), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory), or the like), a hard drive, or a solid state drive (SSD).

The external memory 234 may further include a flash drive such as compact flash (CF), secure digital (SD), micro secure digital (Micro-SD), mini secure digital (Mini-SD), extreme digital (xD), a multimedia card (MMC), a memory stick, or the like. The external memory 234 may be operatively and/or physically connected to the electronic device 201 through various interfaces.

A security module 236 may be a module that includes a storage space of which a security level is higher than that of the memory 230 and may be a circuit that guarantees safe data storage and a protected execution environment. The security module 236 may be implemented with a separate circuit and may include a separate processor. For example, the security module 236 may be in a smart chip or a secure digital (SD) card, which is removable, or may include an embedded secure element (eSE) embedded in a fixed chip of the electronic device 201. Furthermore, the security module 236 may operate based on an operating system (OS) that is different from the OS of the electronic device 201. For example, the security module 236 may operate based on java card open platform (JCOP) OS.

The sensor module 240 may measure, for example, a physical quantity or may detect an operation state of the electronic device 201. The sensor module 240 may convert the measured or detected information to an electric signal. For example, the sensor module 240may include at least one of a gesture sensor 240A, a gyro sensor 240B, a barometric pressure sensor 240C, a magnetic sensor 240D, an acceleration sensor 240E, a grip sensor 240F, the proximity sensor 240G, a color sensor 240H (e.g., red, green, blue (RGB) sensor), a biometric sensor 240I, a temperature/humidity sensor 240J, an illuminance sensor 240K, or an UV sensor 240M. Although not illustrated, additionally or generally, the sensor module 240 may further include, for example, an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 240 may further include a control circuit for controlling at least one or more sensors included therein. According to an embodiment, the electronic device 201 may further include a processor that is a part of the processor 210 or independent of the processor 210 and is configured to control the sensor module 240. The processor may control the sensor module 240 while the processor 210 remains at a sleep state.

The input device 250 may include, for example, a touch panel 252, a (digital) pen sensor 254, a key 256, or an ultrasonic input device (or unit) 258. For example, the touch panel 252 may use at least one of capacitive, resistive, infrared and ultrasonic detecting methods. Also, the touch panel 252 may further include a control circuit. The touch panel 252 may further include a tactile layer to provide a tactile reaction to a user.

The (digital) pen sensor 254 may be, for example, a part of a touch panel or may include an additional sheet for recognition. The key 256 may include, for example, a physical button, an optical key, a keypad, or the like. The ultrasonic input device 258 may detect (or sense) an ultrasonic signal, which is generated from an input device, through a microphone (e.g., a microphone 288) and may check data corresponding to the detected ultrasonic signal.

The display 260 (e.g., the display 160) may include a panel 262, a hologram device 264, or a projector 266. The panel 262 may be the same as or similar to the display 160 illustrated in FIG. 1. The panel 262 may be implemented, for example, to be flexible, transparent or wearable. The panel 262 and the touch panel 252 may be integrated into a single module. The hologram device 264 may display a stereoscopic image in a space using a light interference phenomenon. The projector 266 may project light onto a screen so as to display an image. For example, the screen may be arranged in the inside or the outside of the electronic device 201. According to an embodiment, the display 260 may further include a control circuit for controlling the panel 262, the hologram device 264, or the projector 266.

The interface 270 may include, for example, a high-definition multimedia interface (HDMI) 272, a universal serial bus (USB) 274, an optical interface 276, or a D-subminiature (D-sub) 278. The interface 270 may be included, for example, in the communication interface 170 illustrated in FIG. 1. Additionally or generally, the interface 270 may include, for example, a mobile high definition link (MHL) interface, a SD card/multimedia card (MMC) interface, or an infrared data association (IrDA) standard interface.

The audio module 280 may convert a sound and an electric signal in dual directions. At least a part of the audio module 280 may be included, for example, in the input/output interface 150 illustrated in FIG. 1. The audio module 280 may process, for example, sound information that is input or output through a speaker 282, a receiver 284, an earphone 286, or the microphone 288.

For example, the camera module 291 may shoot a still image or a video. According to an embodiment, the camera module 291 may include at least one or more image sensors (e.g., a front sensor or a rear sensor), a lens, an image signal processor (ISP), or a flash (e.g., an LED or a xenon lamp).

The power management module 295 may manage, for example, power of the electronic device 201. According to an embodiment, a power management integrated circuit (PMIC), a charger IC, or a battery or fuel gauge may be included in the power management module 295. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, or a rectifier, and the like. The battery gauge may measure, for example, a remaining capacity of the battery 296 and a voltage, current or temperature thereof while the battery is charged. The battery 296 may include, for example, a rechargeable battery and/or a solar battery.

The indicator 297 may display a specific state of the electronic device 201 or a part thereof (e.g., the processor 210), such as a booting state, a message state, a charging state, and the like. The motor 298 may convert an electrical signal into a mechanical vibration and may generate the following effects: vibration, haptic, and the like. Although not illustrated, a processing device (e.g., a GPU) for supporting a mobile TV may be included in the electronic device 201. The processing device for supporting the mobile TV may process media data according to the standards of digital multimedia broadcasting (DMB), digital video broadcasting (DVB), MediaFlo™, or the like.

Each of the above-mentioned elements of the electronic device according to various embodiments of the present disclosure may be configured with one or more components, and the names of the elements may be changed according to the type of the electronic device. In various embodiments, the electronic device may include at least one of the above-mentioned elements, and some elements may be omitted or other additional elements may be added. Furthermore, some of the elements of the electronic device according to various embodiments may be combined with each other so as to form one entity, so that the functions of the elements may be performed in the same manner as before the combination.

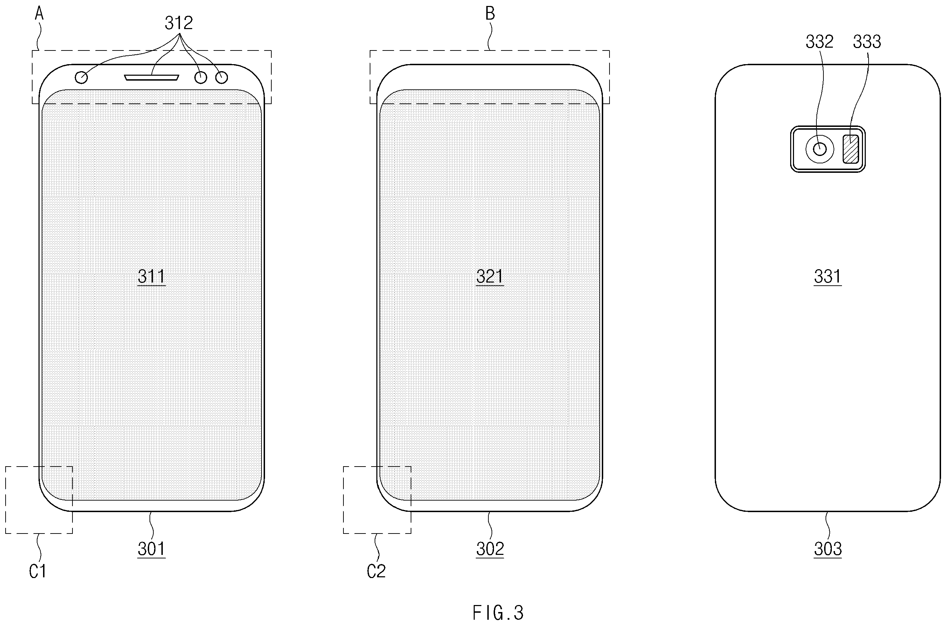

FIG. 3 illustrates example electronic devices according to various embodiments.

Referring to FIG. 3, electronic devices 301 to 303 according to various embodiments are illustrated. Front surfaces of the electronic devices 301 and 302 and a rear surface of the electronic device 303 are illustrated in FIG. 3.

According to an embodiment, for the electronic device 301, a display 311 may be disposed on the front surface of the electronic device 301. The display 311 may occupy almost the entire front surface of the electronic device 301. Various hardware components 312 (e.g., a front camera, a proximity sensor, an iris sensor, a receiver, and the like) may be arranged on an upper front area A of the electronic device 301, as shown. According to various embodiments, the display 311 may have an aspect ratio of 16:9 or 18:9.

According to an embodiment, for electronic device 302, a display 321 may be disposed on the front surface of the electronic device 302. Contrary to the preceding embodiment, hardware components may not be directly exposed on an upper front area B of the electronic device 302. For example, a receiver may be disposed on an upper lateral surface of the electronic device 302. In another example, a front camera, a proximity sensor, an iris sensor, and the like may be arranged below the upper front area B (that is, inward towards a center of the phone, beyond the boundary of the upper front area B) and may not be directly exposed on the surface of the device, being disposed instead under a glass cover (and thus not visible in FIG. 3).

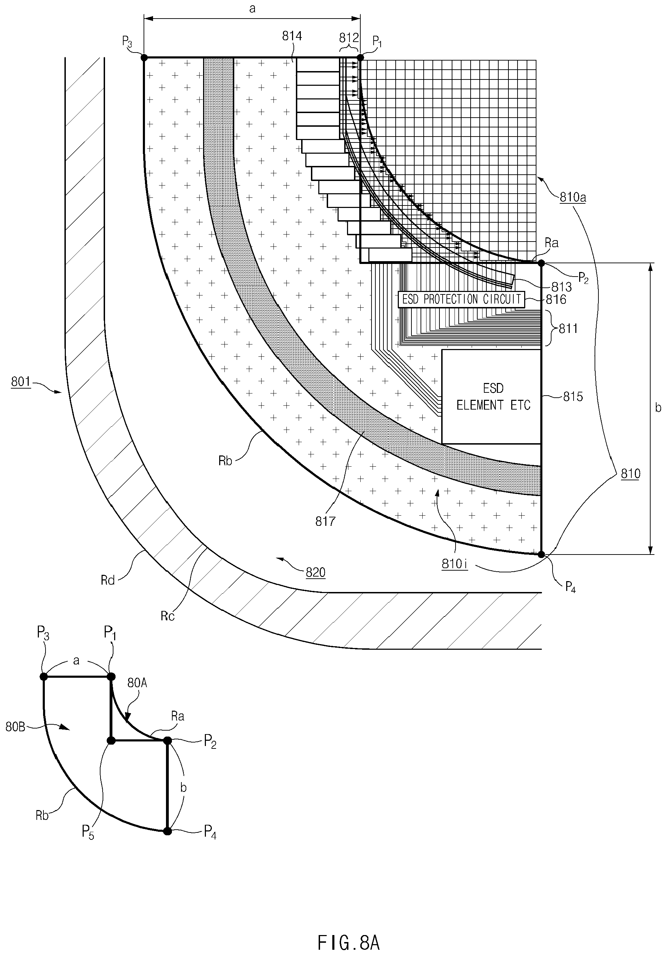

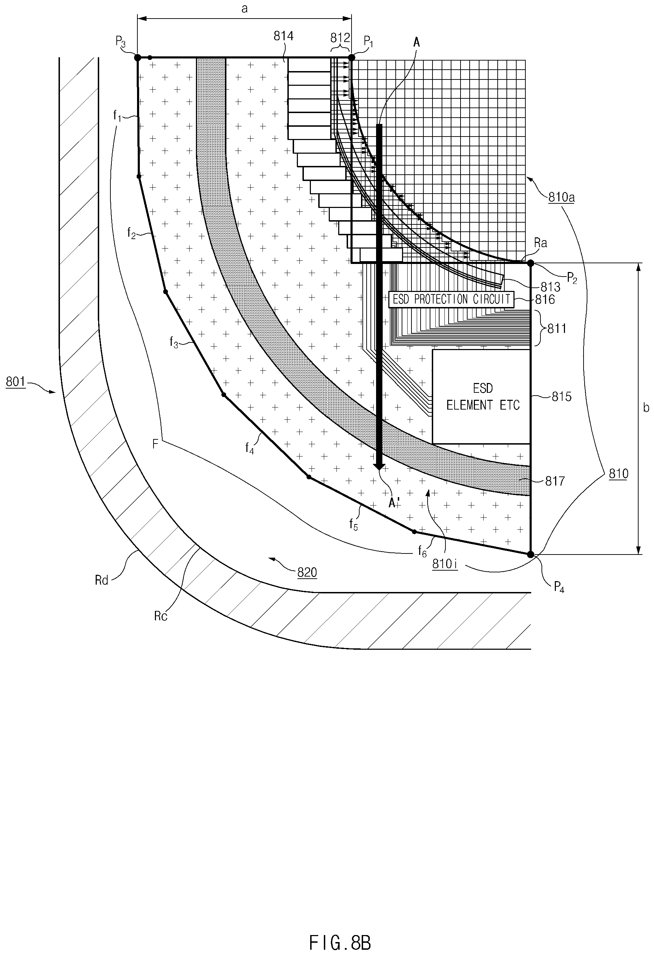

According to an embodiment, for electronic devices 301 and 302, the displays 311 and 321 302 may include a display panel with at least one rounded corner. For example, a display panel with a rounded lower-left corner may be included in lower-left corner areas C1 and C2 of the electronic devices 301 and 302, as depicted. The display panel with the rounded lower-left corner may be implemented, for example, as illustrated in FIGS. 8A and 8B which will be described later below.

According to an embodiments, a back cover 331, an electronic device 303 may include a camera 332, and a hardware component 333 disposed on the rear surface of the electronic device 303. The back cover 331 may be formed of, for example, metal, glass, plastics, or a combination thereof. The hardware component 333 may include various modules, which may be, for example, one or more of a flash, a biometric sensor (e.g., a heart rate sensor), a UV sensor, and the like.

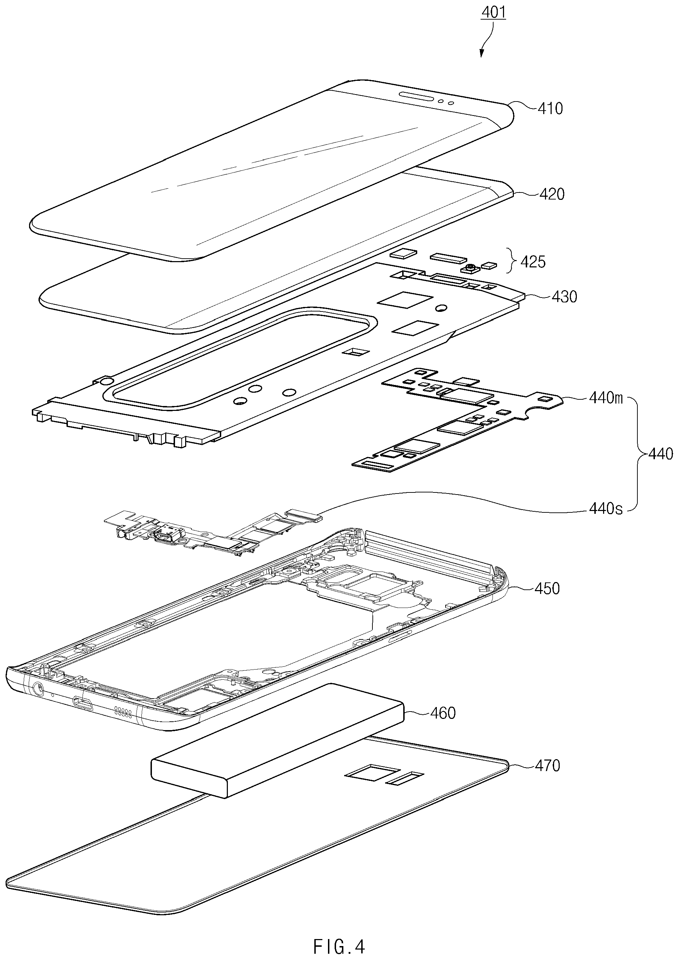

FIG. 4 is an exploded perspective view of an electronic device according to an embodiment.

Referring to FIG. 4, an electronic device 401 according to an embodiment may include a cover glass 410, a display 420, a front hardware module 425, a bracket 430, a printed circuit board 440, a rear housing 450, a battery 460, and a back cover 470. According to various embodiments, the electronic device 401 may not include some of the components illustrated in FIG. 4 and may further include components not being illustrated in FIG. 4.

The cover glass 410 may be transparent, thus allowing the pass through of light generated by the display 420. Furthermore, a user may perform a touch input (including contact using an electronic pen) and/or fingerprint authentication by touching the cover glass 410 with a portion (e.g., a finger) of the user's body. The cover glass 410 may be formed of, for example, reinforced glass, reinforced plastics, a polymer material, or the like to protect the display 420 and the components disposed within the electronic device 401 from contact damage or external shock. According to various embodiments, the cover glass 410 may also be referred to as a "glass window."

According to an embodiment, the cover glass 410 may be curved at one side or opposite sides thereof. Furthermore, according to an embodiment, the cover glass 410 may have at least one rounded corner disposed along the circumference thereof. Although the cover glass 410 illustrated in FIG. 4 has two rounded lower corners, the cover glass 410 is not limited thereto. For example, all of the four corners of the cover glass 410 may be rounded in other embodiments of the disclosure.

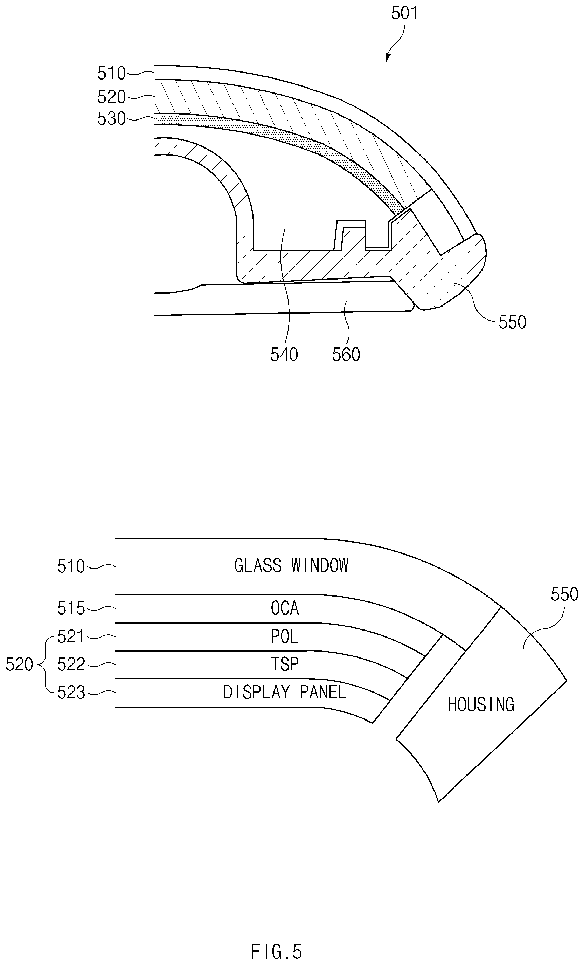

The display 420 may be disposed, installed, coupled and/or affixed within the electronic device below the cover glass 410, and may be visibly exposed to an exterior of the electronic device through transparency of the cover glass 410. The display 420 may generate output contents for display (e.g., text, an image, a video, an icon, a widget, a symbol, or the like) and/or may be capable of receiving touch inputs (e.g., a touch, a gesture, hovering, or the like) from a user. The display 420 may include, for example, a display panel, a touch panel, and/or a fingerprint sensor. The display panel 420 may have, on a rear surface thereof, a "back panel," formed of, for example, copper (Cu) or graphite. The stack structure of the display 420 will be described below in more detail with reference to FIG. 5.

According to an embodiment, the display 420 may be curved at one side or opposite sides thereof. Furthermore, according to an embodiment, the display 420 may have at least one rounded corner on the circumference thereof. Although the display 420 illustrated in FIG. 4 has two rounded lower corners, the display 420 is not limited thereto. For example, all of the four corners of the display 420 may be rounded in other embodiments of the disclosure.

According to an embodiment, the display panel of the display 420 may include an LCD panel, an LED display panel, an OLED display panel, an MEMS display panel, or an electronic paper display panel. Furthermore, the touch panel included in the display 420 may include, for example, a capacitive touch panel, a pressure-sensitive touch panel, a resistive touch panel, or an infrared touch panel.

The front hardware module 425 may include various components, such as a front camera, a proximity sensor, an iris sensor, a receiver, a fingerprint sensor, and the like. The front hardware module 425 may be disposed below the cover glass 410 and may be visibly exposed to an exterior of the electronic device through the cover glass 410. According to various embodiments, the front hardware module 425 may be disposed below the display 420 and thus not visibly exposed to the exterior of the device.

The bracket 430 may be formed of, for example, a magnesium alloy and may be disposed below the display 420 and above the printed circuit board 440. The bracket 430 may be coupled with the display 420 and the printed circuit board 440 to provide physical support for the display 420 and the printed circuit board 440. According to an embodiment, a swelling gap may be formed in the bracket 430 to account for swelling of the battery 460 when the battery 460 experiences a "secular" change.

The printed circuit board 440 may include, for example, a main printed circuit board 440m and a sub-printed circuit board 440s. According to an embodiment, the main printed circuit board 440m and the sub-printed circuit board 440s may be disposed below the bracket 430 and may be electrically coupled with each other through a connector or interconnection wiring. The printed circuit boards 440m and 440s may be implemented with, for example, a rigid printed circuit board (rigid PCB). The printed circuit boards 440m and 440s may be referred to as a main board, a printed board assembly ("PBA"), or simply a "PCB". Various electronic components (e.g., a processor, a memory, and the like), elements, printed circuits, and the like of the electronic device 401 may be mounted or arranged on the printed circuit boards 440m and 440s.

The rear housing 450 may be disposed below the printed circuit board 440 to provide enclosed housing the components within the electronic device 401. The rear housing 450 may form a lateral side(s) of the electronic device 401 as well. According to various embodiments, the rear housing 450 may also be referred to as a "rear case" or a "rear plate."

The battery 460 may bilaterally convert between chemical energy and electrical energy. For example, the battery 460 may convert chemical energy into electrical energy and may supply the electrical energy to the display 420 and various components or modules mounted on the printed circuit board 440. The battery 460 may also convert electrical energy supplied from an external connection into chemical energy for energy storage. To this end, a power management module for managing charging and discharging of the battery 460 may be included in the printed circuit board 440.

The back cover 470 may be coupled to a rear surface of the electronic device 401. The back cover 470 may be formed of reinforced glass, a plastic injection-molded material, metal, and/or the like. According to various embodiments, the back cover 470 may be implemented as integrated with the rear housing 450, or as detachable by a user.

FIG. 5 illustrates a side sectional view of an electronic device and a stack structure of a display, according to an embodiment of the disclosure.

Referring to FIG. 5, a right side sectional view of an electronic device 501 according to an embodiment is illustrated. According to the right side sectional view, the electronic device 501 may include a glass window 510, a display 520, an adhesive 530, a bracket 540, a housing 550, and a back cover 560.

According to an embodiment, the display 520 may be disposed below the glass window 510 (as described above) and may be attached to the bracket 540 using the adhesive 530. As illustrated in FIG. 5, the glass window 510 and the display 520 may be rounded, corresponding to the shape of the bracket 540. The bracket 540 may be coupled with the housing 550, and the housing 550 may be coupled with the back cover 560.

According to an embodiment, the display 520 may include a polarizer 521, a touch screen panel (or touch sensor) 522, and a display panel 523. The display 520 may be coupled with the glass window 510 through an optical clear adhesive (OCA) film 515, and one side of the glass window 510 may therefore come into contact with the housing 550.

The polarizer (or polarizer film) 521 may pass light polarized in a prespecified direction to enhance visibility of the display when the electronic device is in a bright environment. The polarizer 521 in some embodiments may be implemented with a poly ethylene terephthalate (PET) film or a tri-acetyl cellulose (TAC) film.

A physical quantity (e.g., electrostatic capacity) in the touch screen panel (or touch sensor) 522 may be altered by a user's touch. The variation in the physical quantity may be provided to a processor through a touch "IC," and the location where the user's touch is detected may be identified based on the physical-quantity variation.

The display panel 523 may generate light based on signals supplied from a display driver IC (DDI), through scan lines and data lines. An example display panel 523, such as an OLED panel, may include organic light-emitting elements, a substrate (e.g., a low-temperature poly silicon (LTPS) substrate) on which the organic light-emitting elements are arranged, and a thin film encapsulation (TFE) film for protecting the organic light-emitting elements.

In the example of FIG. 5, the touch screen panel 522 is illustrated as being a separate component. However, according to various embodiments, the touch screen panel 522 may be implemented integrally with the display panel 523 (e.g., as an in-cell touch panel). In this example, the touch screen panel 522 may be formed on the thin film encapsulation (TFE) film of the display panel 523.

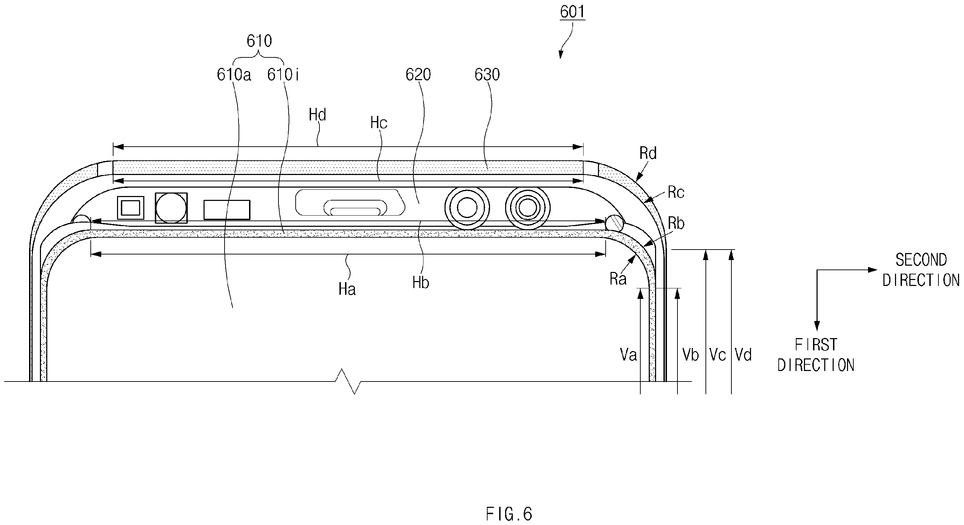

FIG. 6 illustrates an upper front area of an electronic device according to an example embodiment.

Referring to FIG. 6, an electronic device 601 according to an embodiment may include a display panel 610 (e.g., the display panel 523 of FIG. 5), a cover glass 620 (e.g., the glass window 510 of FIG. 5), and a housing 630 (e.g., the housing 550 of FIG. 5). The housing 630 may house the display panel 610 within the electronic device 601, and may be coupled with the cover glass 620. The cover glass 620 may be disposed "over" the display panel 610 as to shield the display panel 610 from an exterior environment, as described earlier above.

According to an embodiment, the contours of the display panel 610, the cover glass 620, and the housing 630 may be formed having a rounded rectangular shape with four curved corners.

According to an embodiment, the display panel 610 may include an active area 610a and an inactive area 610i surrounding the active area 610a. For example, a plurality of pixels, including OLEDs, may be arranged in the active area 610a. The active area 610a may have at least one (e.g., two or four) curved comer(s) on the circumference thereof. In contrast, a plurality of pixels may not be arranged in the inactive area 610i, and circuit components (e.g., an emission driver, a gate driver, and the like) or interconnection wiring through which to transfer various signals (e.g., an ELVSS voltage, an ELVDD voltage, a data signal, a scan signal, an EM signal, and the like) may be formed in the inactive area 610i. That is, in one embodiment of the invention, no pixels are arranged in the inactive area.

According to an embodiment, the circumference of the active area 610a and the outer circumference of the inactive area 610i (that is, the contour of the display panel 610) may be formed to have a rounded rectangular shape with at least one curved corner.

For example, the circumference of the active area 610a may include a vertical side (or vertical periphery) Va extending in a first direction (e.g., the vertical direction), a horizontal side (or horizontal periphery) Ha extending in a second direction (e.g., the horizontal direction) perpendicular to the first direction, and a curve Ra connecting the vertical side Va and the horizontal side Ha. Furthermore, for example, the outer circumference of the inactive area 610i (that is, the contour of the display panel 610) may include a vertical side Vb extending in the first direction, a horizontal side Hb extending in the second direction, and a curve Rb connecting the vertical side Vb and the horizontal side Hb.

According to an embodiment, in the active area 610a, the curve Ra may have a gradually decreasing radius of curvature from the boundary point where the vertical side Va and the curve Ra join together, to the boundary point where the curve Ra and the horizontal side Ha join together. Similarly, for the outer circumference of the inactive area 610i (that is, the contour of the display panel 610), the curve Rb may have a gradually decreasing radius of curvature from the boundary point where the vertical side Vb and the curve Rb join together to the boundary point where the curve Rb and the horizontal side Hb join together.

According to an embodiment, the average radius of curvature of a curve that forms any one corner of the outer circumference of the inactive area 610i (that is, the contour of the display panel 610) may be designed to be larger than that of a curve that forms any one corner of the circumference of the active area 610a. For example, the average radius of curvature of the curve Rb that forms the upper right corner of the outer circumference of the inactive area 610i (that is, the contour of the display panel 610) may be larger than that of the curve Ra that forms the upper right corner of the circumference of the active area 601a.

According to an embodiment, the length of a curve that forms any one corner of the outer circumference of the inactive area 610i (that is, the contour of the display panel 610) may be designed to be longer than that of a curve that forms any one corner of the circumference of the active area 610a. For example, the length of the curve Rb that forms the upper right corner of the outer circumference of the inactive area 610i (that is, the contour of the display panel 610) may be longer than that of the curve Ra that forms the upper right corner of the circumference of the active area 601a.

The cover glass 620 may have a rounded rectangular shape, and the contour of the cover glass 620 may include a vertical side Vc extending in the first direction, a horizontal side Hc extending in the second direction, and a curve Rc connecting the vertical side Vc and the horizontal side Hc. In this case, the curve Rc may have a gradually decreasing radius of curvature from the boundary point where the vertical side Vc and the curve Rc join together to the boundary point where the curve Rc and the horizontal side Hc join together.

According to an embodiment, the average radius of curvature of a curve that forms any one corner of the contour of the cover glass 620 may be designed to be larger than that of a curve that forms any one corner of the outer circumference of the inactive area 610i (that is, the contour of the display panel 610). For example, the average radius of curvature of the curve Rc that forms the upper right corner of the contour of the cover glass 620 may be larger than that of the curve Rb that forms the upper right corner of the contour of the display panel 610.

The housing 630 may have a rounded rectangular shape, and the contour of the housing 630 may include a vertical side Vd extending in the first direction, a horizontal side Hd extending in the second direction, and a curve Rd connecting the vertical side Vd and the horizontal side Hd. In this case, the curve Rd may have a gradually decreasing radius of curvature from the boundary point where the vertical side Vd and the curve Rd join together to the boundary point where the curve Rd and the horizontal side Hd join together.

According to an embodiment, the average radius of curvature of a curve that forms any one corner of the contour of the housing 630 may be designed to be larger than that of a curve that forms any one corner of the contour of the cover glass 620. For example, the average radius of curvature of the curve Rd that forms the upper right corner of the contour of the housing 630 may be larger than that of the curve Rc that forms the upper right corner of the contour of the cover glass 620.

According to various embodiments, the display panel 610 may include a front surface and at least one side surface, as illustrated in FIGS. 4 and 5. At least a portion of the inactive area 610i formed in the display panel 610 may be disposed on the at least one side surface. In this case, a display driver IC for driving the display panel 610 may be disposed on the at least one side surface.

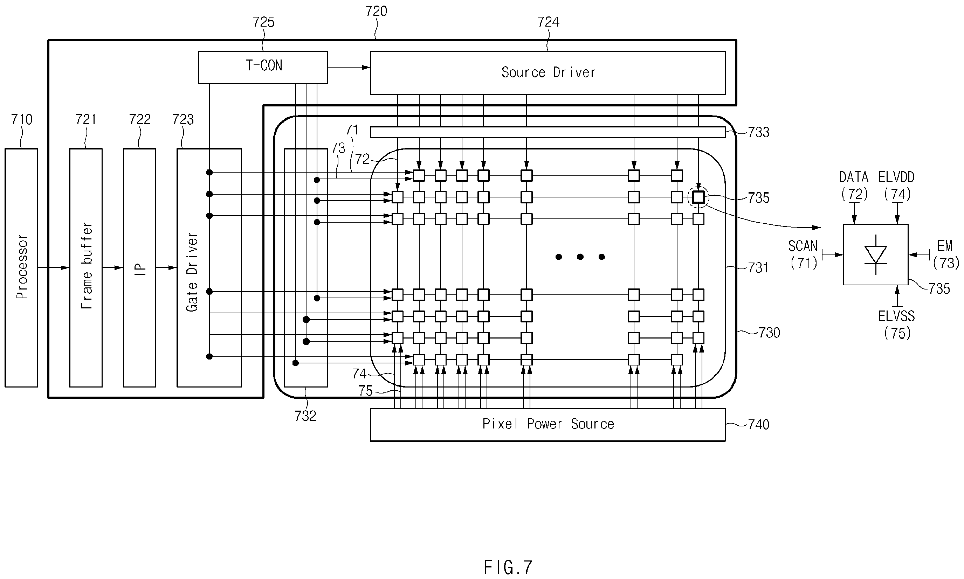

FIG. 7 is a block diagram of an electronic device according to an embodiment.

Referring to FIG. 7, an electronic device according to an embodiment may include a processor 710, a display driver IC (DDI) 720, a display panel 730, and a pixel power source 740. According to various embodiments, the pixel power source 740 may be included in the display driver IC (DDI) 720.

The processor 710 (the host) may obtain image data from a memory or a network and may provide the obtained image data to the display driver IC 720.

The display driver IC 720 may generate signals and power corresponding to the image data received from the processor 710 and may supply the signals and the power to the display panel 730.

According to an embodiment, the display driver IC 720 may include a frame buffer 721, an image processing (IP) unit 722, a gate driver 723, a source driver 724, and a timing controller (T-CON) 725. According to various embodiments, the display driver IC 720 may further include an oscillator, a frame rate adjustment module, or the like.

The frame buffer 721 may store the image data received from the processor 710 (the host). According to an embodiment, the frame buffer 721 may include a memory space that corresponds to the resolution and the number of color gradations of the image data. According to various embodiments, the frame buffer 721 may be referred to as a graphic RAM or a line buffer.

The image processing (IP) unit 722 may improve or correct the quality of the image data provided by the frame buffer 721. For example, the image processing (IP) unit 722 may correct the image data depending on the pixel layout of a pixel array 731.

The gate driver 723 and the source driver 724 may generate signals 71 and 72 to be supplied to the display panel 730 under the control of the timing controller 725.

The gate driver 723 may supply the scan signal (or gate signal) 71 to each pixel of the display panel 730 through a scan line. The gate driver 723 may control the voltage of a gate terminal of a scan transistor (scan TFT) based on the scan signal 71 to control whether the pixel emits light. Although FIG. 7 illustrates that the gate driver 723 is disposed on a left side of the display panel 730, embodiments of the present disclosure are not limited thereto. For example, the gate driver 723 may also supply the scan signals 71 to the pixels from opposite sides of the display panel 730 to prevent a voltage drop of the scan signals 71.

The source driver 724 may supply the data signal (or source signal) 72 to each pixel of the display panel 730 through a data line. The source driver 724 may control the intensity of light emitted by the pixel by applying the data signal 72.

The timing controller (T-CON) 725 may provide an image signal corresponding to the image data to the gate driver 723 and the source driver 724. The timing controller (T-CON) 725 may control transmission timing of the signals transmitted by the gate driver 723 and the source driver 724.

The display panel 730 may include the pixel array 731, an emission driver 732, and an electrostatic discharge (or "ESD") protection circuit 733. The pixel array 731 may include the active area of the display panel 730 and may have a rounded rectangular shape. For example, the pixel array 731 may have a rounded rectangular shape according to the layout of the pixels included in the pixel array 731. The emission driver 732 and the ESD protection circuit 733 may be disposed or formed in the inactive area of the display panel 730.

The pixel array 731 may include a plurality of (e.g., millions of) pixels. Contents (e.g., an image, text, a video, or the like) may be output for display based on light generated by the pixel array 731. For example, the plurality of pixels (including a pixel 735) may each include sub-pixels having red, green, and blue filters.

The emission driver 732 may apply an emission control signal (hereinafter, referred to as an EM signal) 73 to each pixel to control emission timing of the pixel. According to an embodiment, the emission driver 732 may be divided into a plurality of blocks. Each of the divided blocks may be referred to as an "emission driving block" or an "EM block". According to various embodiments, alternate implementations are possible, such as the emission driver 732 being included in the display driver IC 720.

The ESD protection circuit 733 may provide shielding against static electricity generated inside or outside the electronic device.

The pixel power source 740 may be electrically coupled to the plurality of pixels included in the pixel array 731 and may supply power to the pixels to facilitate the generation of light by the pixels. According to an embodiment, the pixel power source 740 may include a DC/DC converter, and the pixel power source 740 may apply, to the pixels, voltages, for example, a first voltage (e.g., "ELVDD") 74 and a second voltage (e.g., "ELVSS") 75 converted by the DC/DC converter.

According to an embodiment, the display panel 730 may be an OLED panel. Accordingly, an OLED, multiple transistors, and a capacitor may be arranged in the pixel 735 included in the display panel 730. According to an embodiment, whether the pixel 735 emits light may be determined based on the scan signal (e.g., "SCAN") 71 received from the gate driver 723, and the intensity of light emitted by the pixel 735 may be determined based on the data signal (e.g., "DATA") 72 received from the source driver 724. Furthermore, the OLED included in the pixel 735 may emit light by using the voltages ELVDD 74 and ELVSS 75 applied by the pixel power source 740. The emission timing of the OLED included in the pixel 735 may be controlled by the EM signal 73 received from the emission driver 732.

FIG. 8A illustrates a lower left area of an electronic device according to an embodiment.

Referring to FIG. 8A, a lower left area of an electronic device 801 according to an embodiment is illustrated. The electronic device 801 may include a display panel 810, a cover glass 820, and a housing 830.

According to an embodiment, the display panel 810 may be divided into an active area 810a and an inactive area 810i with a curve Ra as a boundary therebetween, as described more thoroughly above.

A plurality of pixels may be arranged in the active area 810a. For example, the plurality of pixels (e.g., the pixel 735 of FIG. 7) may be arranged along the curve Ra in at least one corner of the active area 810a. The curve Ra may refer to a reference line for arranging the plurality of pixels. Since the pitch of the pixels has a micrometer or nanometer scale, the curve Ra illustrated in FIG. 8A may be understood as substantially representing the periphery of the plurality of pixels. According to various embodiments, the curve Ra is illustrated in FIG. 8A as an example, but the present disclosure is not limited thereto. For example, the curve Ra may be implemented using a refraction line having straight line segments and/or curved line segments combined together.

Circuits, elements, modules, or electrical paths through which a display driver IC supplies signals or power to the plurality of pixels may be formed in layers in the inactive area 810i.

For example, electrical paths 811 extending from a source driver of the display driver IC, and electrical paths 812 extending from a gate driver (e.g., 723 of FIG. 7) and/or an emission driver (e.g., 732 of FIG. 7) may cross one another in an askew position in a region 80A of a corner area 80B of the inactive area 810i. That is, the electrical paths 811 (through which to transmit data signals) and the electrical paths 812 (through which to transmit scan signals and/or EM signals) may cross one another in an askew position in the region 80A of the corner area 80B. When the electrical paths 811 and 812 cross one another in the askew position, this may indicate that the electrical paths 811 and the electrical paths 812 cross over one another without affecting signal transmission in either (i.e., the electrical paths 811 and 812 are not electrically connected with one another).

According to an embodiment, as in FIG. 6, a curve Rb of the outer circumference of the inactive area 810i may have an average radius of curvature larger than that of the curve Ra of the circumference of the active area 810a. Furthermore, according to an embodiment, the curves Ra and Rb may each have a gradually decreasing radius of curvature from the border with the vertical side to the border with the horizontal side.

According to an embodiment, the corner area 80B may correspond to an area surrounded by the following lines: (i) the curve Ra (P1-P2); (ii) a virtual line (P1-P3) connecting point P1 where the vertical side of the active area 810a and the curve Ra join together and point P3 where the outer vertical side of the inactive area 810i (that is, the vertical side of the display panel 810) and the curve Rb join together; (iii) the curve Rb (P3-P4); and (iv) a virtual line (P2-P4) connecting point P2 where the horizontal side of the active area 810a and the curve Ra join together and point P4 where the outer horizontal side of the inactive area 810i (that is, the horizontal side of the display panel 810) and the curve Rb join together.

Furthermore, according to an embodiment, the region 80A of the corner area 80B may correspond to an area surrounded by the following lines: (i) the curve Ra; (ii) a virtual line extending downwards from the vertical side of the active area 810a; and (iii) a virtual line extending leftwards from the horizontal side of the active area 810a.

According to various embodiments, various other circuit components, circuits, elements, modules, or electrical paths may be formed or arranged in the inactive area 810i. For example, according to the embodiment illustrated in FIG. 8A, the inactive area 810i may include the following components formed or arranged therein: a first interconnection wire (e.g., for applying ELVDD) 813 extending from a pixel power source (e.g., 740 of FIG. 7); blocks 814 that include the gate driver (e.g., 723 of FIG. 7), the emission driver (e.g., 732 of FIG. 7), and the electrical paths extending from the gate driver and/or the emission driver; other circuit components 815 including an ESD element; an ESD protection circuit 816; and a second interconnection wire (for applying ELVSS) 817 extending from the pixel power source. The layout of the components 813 to 817 will be described below.

According to an embodiment, the first interconnection wire (the interconnection wire for applying ELVDD) 813 and the second interconnection wire (the interconnection wire for applying ELVSS) 817 extending from the pixel power source may be arranged to surround at least a portion of the active area 810a.

According to an embodiment, some of the electrical paths 812 extending from the gate driver and/or the emission driver and some of the electrical paths 811 extending from the source driver may cross one another at a position disposed between the curve Ra and the first interconnection wire (the interconnection wire for applying ELVDD) 813.

According to an embodiment, a portion of the first interconnection wire (for applying ELVDD) 813 may be disposed between the curve Ra and the electrical paths 812 extended from the gate driver and/or the emission driver. Furthermore, some of the electrical paths 812 extending from the gate driver and/or the emission driver may be arranged between a portion of the first interconnection wire (applying ELVDD) 813 and the second interconnection wire (for applying ELVSS) 817. Meanwhile, the ESD protection circuit 816 may be disposed between the first interconnection wire (for applying ELVDD) 813 and the second interconnection wire (for applying ELVSS) 817.

In short, referring to virtual line A-A' of FIG. 8B (as illustrated in FIG. 8B, to alleviate the visual complexity of FIG. 8A), the pixels included in the active area 810a, some of the electrical paths 811 and 812 extending from the gate driver, the source driver, and/or the emission driver, the first interconnection wire (for applying ELVDD) 813, some of the electrical paths 811 and 812 extending from the gate driver, the source driver, and/or the emission driver, blocks 814 including the electrical paths extending from the gate driver and/or the emission driver, and the second interconnection wire (the interconnection wire for applying ELVSS) 817 may sequentially appear along virtual line A-A'.

According to various embodiments, the gate driver and/or the emission driver may be included in blocks 814 or may be disposed in the display driver IC. Furthermore, for example, the blocks 814 may include a part of the gate driver and/or the emission driver and may each include at least one transistor. According to an embodiment, at least one of the blocks 814 may be disposed in the region 80A of the corner area 80B.

According to the embodiment illustrated in FIG. 8A, the curve Rb may have an average radius of curvature larger than that of the curve Ra. Furthermore, the curves Ra and Rb may each have a gradually decreasing radius of curvature beginning from the border adjacent to the vertical side of the electronic device and spanning to the border adjacent to the horizontal side of the electronic device. At least one of the widths between the curves Ra and Rb from an auxiliary line "a" (P1-P2) to an auxiliary line "b" (P3-P4) may be longer than the length of the auxiliary line "a" (P1-P2). Due to the shapes of the curves Ra and Rb, the length of the auxiliary line "b" illustrated in FIG. 8A may be longer than that of the auxiliary line "a". Accordingly, the inactive area 810i may provide a space in which various circuit components, circuits, elements, modules, or electrical paths may thus be arranged.

FIG. 8B further illustrates a lower left area of an electronic device according to another embodiment.

Referring again to FIG. 8B, a lower left area of the electronic device 801 according to an embodiment is illustrated. The electronic device 801 may include the display panel 810, the cover glass 820, and the housing 830. In FIG. 8B, elements identical to those illustrated in FIG. 8A are provided with identical reference numbers, and descriptions thereof will be omitted.

According to an embodiment, the outer circumference of the inactive area 810i, that is, the contour of the display panel 810 may include a vertical side, a horizontal side, and a refraction line F (P3-P4) connecting the vertical side and the horizontal side. The refraction line F may be implemented by a combination of a plurality of line segments f1 to f6. In this case, the length of the refraction line F, that is, the sum of the lengths of the plurality of line segments f1 to f6 may be designed to be greater than the length of the curve Ra of the active area 810a.

According to various embodiments, at least one of the plurality of line segments f1 to f6 including the refraction line F may be implemented with a curved line segment. That is, the refraction line F may be implemented by a combination of straight line segments and curved line segments.

According to various embodiments of the present disclosure, the display panel 810 and the active area 810a included in the display panel 810 may be formed in a rounded (or substantially rounded or round-edged) rectangular shape. Accordingly, the display panel 810 may be disposed within the housing 830, which may also be formed in a rounded rectangular shape corresponding to the display panel 810, while minimizing any potential extra areas and/or spaces in the cavity of the housing 830.

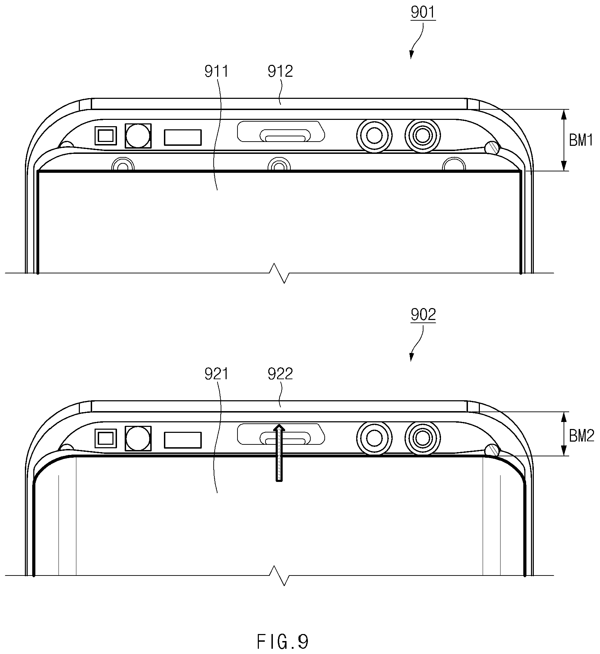

For example, referring to FIG. 9, an electronic device 901 and an electronic device 902 according to an embodiment of the present disclosure are illustrated. In the example of the electronic device 901, because a display panel 911 has a rectangular shape with right-angled corners (i.e., no roundness to the edges), the distance between a housing 912 and the display panel 911 corresponds to BM1. In contrast, in the case of the electronic device 902, a display panel 921 may be formed with rounded corners. Accordingly, a radius of curvature may be applied to the corners of the display panel 921, and thus the distance between a housing 922 and the display panel 921 may be reduced to BM2, which is a distance smaller than BM1 of 901.

As described above, according to various embodiments of the present disclosure, the distance between the housing 922 and the display panel 921 may be reduced to BM2, maximizing an area occupied by a display on a front surface of the electronic device 902, and thereby providing a more pleasing aesthetic design to a user of the electronic device.

An electronic device according to an embodiment may include a display panel including an active area in which a plurality of pixels are arranged and an inactive area in which the plurality of pixels are not arranged. A circumference of the active area and a contour of the display panel may have a rounded rectangular shape with at least one curved corner. A curve forming any one corner of the contour of the display panel may have a larger average radius of curvature than a curve forming any one corner of the circumference of the active area.

According to an embodiment, a curve forming any one corner of the contour of the display panel may be longer than a curve forming any one corner of the circumference of the active area.

According to an embodiment, the electronic device may further include a cover glass disposed on the display panel. The cover glass may have a rounded rectangular shape with at least one curved corner, and a curve forming any one corner of a contour of the cover glass may have a larger average radius of curvature than a curve forming any one corner of the contour of the display panel.

According to an embodiment, the contour of the cover glass may include a first side extending in a first direction, a second side extending in a second direction perpendicular to the first direction, and a curve connecting the first side and the second side. The curve may have a gradually decreasing radius of curvature from a point where the first side and the curve join together to a point where the curve and the second side join together.

According to an embodiment, the electronic device may further include a housing that houses the display panel inside and is combined with the cover glass. The housing may have a rounded rectangular shape with at least one curved corner, and a curve forming any one corner of a contour of the housing may have a larger average radius of curvature than a curve forming any one corner of the contour of the cover glass.

According to an embodiment, the electronic device may further include a housing that houses the display panel inside, and the housing may have a rounded rectangular shape with at least one curved corner. A curve forming any one corner of a contour of the housing may have a larger average radius of curvature than a curve forming any one corner of the contour of the display panel.

According to an embodiment, the contour of the housing may include a first side extending in a first direction, a second side extending in a second direction perpendicular to the first direction, and a curve connecting the first side and the second side. A radius of curvature of the curve may gradually decrease and then increase from a point where the first side and the curve join together to a point where the curve and the second side join together.

According to an embodiment, the electronic device may further include a display driver integrated circuit (DDI) for driving the display panel. An electrical path through which the display driver integrated circuit supplies a signal or power to the display panel may be formed in the inactive area.

According to an embodiment, the display driver integrated circuit may include a gate driver and a source driver. An electrical path extracted from the gate driver and an electrical path extracted from the source driver may cross each other in skew position in a corner area of the inactive area.

According to an embodiment, the electronic device may further include an emission driver. The electrical path extracted from the source driver and an electrical path extracted from the emission driver may cross each other in skew position in the corner area of the inactive area.

According to an embodiment, the circumference of the active area may include a first side extending in a first direction, a second side extending in a second direction perpendicular to the first direction, and a first curve connecting the first side and the second side. The contour of the display panel may include a third side extending in the first direction, a fourth side extending in the second direction, and a second curve connecting the third side and the fourth side. The inactive area may be formed to surround the active area. The corner area may correspond to an area surrounded by the first curve, a virtual line connecting a point where the first side and the first curve join together and a point where the third side and the second curve join together, the second curve, and a virtual line connecting a point where the second side and the first curve join together and a point where the fourth side and the second curve join together.

According to an embodiment, the electronic device may further include a display driver integrated circuit (DDI) for driving the display panel. The circumference of the active area may include a first side extending in a first direction, a second side extending in a second direction perpendicular to the first direction, and a first curve connecting the first side and the second side. The inactive area may be formed to surround the active area, and a portion of an electrical path through which the display driver integrated circuit supplies a signal or power to the display panel may be formed in a region of the inactive area that is surrounded by the first curve, an extension line of the first side, and an extension line of the second side.

According to an embodiment, the display driver integrated circuit may include a gate driver and a source driver. An electrical path extracted from the gate driver and an electrical path extracted from the source driver may cross each other in skew position in the region surrounded by the first curve, the extension line of the first side, and the extension line of the second side.

According to an embodiment, the electronic device may further include an emission driver. The electrical path extracted from the source driver and an electrical path extracted from the emission driver may cross each other in skew position in the region surrounded by the first curve, the extension line of the first side, and the extension line of the second side.

According to an embodiment, the electronic device may further include a pixel power source electrically connected with the plurality of pixels and applying a first voltage and a second voltage to each of the plurality of pixels and a first interconnection wire and a second interconnection wire arranged to surround at least a portion of the active area and applying the first voltage and the second voltage, respectively. A portion of the electrical path extracted from the gate driver or the emission driver and a portion of the electrical path extracted from the source driver may cross each other in a space between the first curve and the first interconnection wire.

According to an embodiment, the display panel may include a front surface and at least one side surface, and at least a portion of the inactive area may be disposed on the at least one side surface.

According to an embodiment, the electronic device may further include a display driver integrated circuit (DDI) for driving the display panel. The display driver integrated circuit may be disposed on the at least one side surface.

An electronic device according to another embodiment may include a display panel including an active area in which a plurality of pixels are arranged and an inactive area in which the plurality of pixels are not arranged, a gate driver electrically connected with the plurality of pixels, an emission driver electrically connected with the plurality of pixels, and an electrical path that electrically connects the gate driver or the emission driver and at least a part of the plurality of pixels. At least one transistor may be disposed on the electrical path. A circumference of the active area may include a first side extending in a first direction, a second side extending in a second direction perpendicular to the first direction, and a first curve connecting the first side and the second side. The inactive area may be formed to surround the active area, and the at least one transistor may be disposed in a region of the inactive area that is surrounded by the first curve, an extension line of the first side, and an extension line of the second side.

According to an embodiment, an outer circumference of the inactive area may correspond to a contour of the display panel. The contour of the display panel may include a third side extending in the first direction, a fourth side extending in the second direction, and a refraction line connecting the third side and the fourth side. The refraction line may be implemented by combining one or more of straight line segments or curved line segments.

According to an embodiment, the refraction line may be designed to be longer than the first curve.

The term "module" used in this disclosure may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to various embodiments may be, for example, implemented by instructions stored in a computer-readable storage media in the form of a program module. The instruction, when executed by a processor (e.g., the processor 120), may cause the one or more processors to perform a function corresponding to the instruction. The computer-readable storage media, for example, may be the memory 130.

A computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), and hardware devices (e.g., a read only memory (ROM), a random access memory (RAM), or a flash memory). Also, a program instruction may include not only a mechanical code such as things generated by a compiler but also a high-level language code executable on a computer using an interpreter. The above hardware unit may be configured to operate via one or more software modules for performing an operation according to various embodiments, and vice versa.

A module or a program module according to various embodiments may include at least one of the above elements, or a part of the above elements may be omitted, or additional other elements may be further included. Operations performed by a module, a program module, or other elements according to various embodiments may be executed sequentially, in parallel, repeatedly, or in a heuristic method. In addition, some operations may be executed in different sequences or may be omitted. Alternatively, other operations may be added.

While the present disclosure has been shown and described with reference to various embodiments thereof, it will be understood by those skilled in the art that various changes in form and details may be made therein without departing from the present disclosure as defined by the appended claims and their equivalents.

## Claims

1. An electronic device, comprising:
a processor; and
a display panel operatively coupled to the processor, the display panel including an active area having an arrangement of a plurality of pixels, and an inactive area in which no pixels are arranged,
wherein a circumference of the active area and a contour of the display panel form a substantially rectangular shape including at least one curved corner, and
wherein a curve forming any one corner of the contour of the display panel includes an larger average radius of curvature than a curve forming any one corner of the circumference of the active area.

2. The electronic device of claim 1, wherein the curve forming any one corner of the contour of the display panel is longer than the curve forming any one corner of the circumference of the active area.

3. The electronic device of claim 1, further comprising:
a cover glass disposed over the display panel,
wherein the cover glass is substantially rectangular and includes at least one curved corner, and
wherein a curve forming any one corner of a contour of the cover glass has a larger average radius of curvature than a curve forming any one corner of the contour of the display panel.

4. The electronic device of claim 3, wherein the cover glass includes: a first edge extending in a first direction, a second edge extending in a second direction perpendicular to the first direction, and the curved corner of the cover glass connecting the first edge and the second edge, and
wherein the curved corner of the cover glass includes a decreasing radius of curvature from a point where the first edge and the curved corner of the cover glass join, to a point where the curved corner of the cover glass and the second edge join.

5. The electronic device of claim 3, further comprising:
a housing in which the display panel is disposed, the housing coupled with the cover glass as to enclose the display panel,
wherein the housing is rectangular and includes at least one curved corner, and
wherein a curve forming any one corner of a contour of the housing has a larger average radius of curvature than the curve forming any one corner of the contour of the cover glass.

6. The electronic device of claim 1, further comprising:
a housing in which the display panel is at least partially enclosed,
wherein the housing is substantially rectangular and includes at least one curved corner, and
wherein a curve forming any one corner of a contour of the housing has a larger average radius of curvature than the curve forming any one corner of the contour of the display panel.

7. The electronic device of claim 6, wherein the housing includes: a first edge extending in a first direction, and a second edge extending in a second direction perpendicular to the first direction, and a curve of the housing connecting the first edge and the second edge, and
wherein a radius of curvature of the curve of the housing gradually decreases and then increases from a point where the first edge and the curve join together to a point where the curve and the second edge join together.

8. The electronic device of claim 1, further comprising:
a display driver integrated circuit (DDI) configured to drive the display panel,
wherein an electrical path through which the DDI transmits a signal or power to the display panel is disposed within the inactive area.

9. The electronic device of claim 8, wherein the DDI includes a gate driver and a source driver, and
wherein an electrical path extending from the gate driver and an electrical path extending from the source driver intersect at a position disposed in a corner area of the inactive area.

10. The electronic device of claim 9, further comprising:
an emission driver,
wherein the electrical path extending from the source driver and an electrical path extending from the emission driver the corner area of intersect at a position disposed in the inactive area.

11. The electronic device of claim 9, wherein the active area includes a first edge extending in a first direction, and a second edge extending in a second direction perpendicular to the first direction, a first curve of the curved corner of the active area connecting the first edge and the second edge,
wherein the display panel includes a third edge extending in the first direction, and a fourth edge extending in the second direction, and a second curved corner connecting the third edge and the fourth edge,
wherein the inactive area at least partially surrounds the active area, and
wherein the corner area corresponds to an area surrounded by the first curve, a virtual line connecting a point where the first edge and the first curve join together and a point where the third edge and the second curve join together, the second curve, and a virtual line connecting a point where the second edge and the first curve join together and a point where the fourth edge and the second curve join together.

12. The electronic device of claim 1, further comprising:
a display driver integrated circuit (DDI) configured to drive the display panel,
wherein the active area includes a first edge extending in a first direction, a second edge extending in a second direction perpendicular to the first direction, and a first curve connecting the first edge and the second edge,
wherein the inactive area at least partially surrounds the active area, and
wherein a portion of an electrical path through which the DDI supplies a signal or power to the display panel is disposed in a region of the inactive area that is surrounded by the first curve, an extension line of the first side, and an extension line of the second side.

13. The electronic device of claim 12, wherein the DDI includes a gate driver and a source driver, and
wherein an electrical path extending from the gate driver and an electrical path extending from the source driver intersect at a position within the region surrounded by the first curve, the extension line of the first side, and the extension line of the second side.

14. The electronic device of claim 13, further comprising:
an emission driver,
wherein the electrical path extending from the source driver and an electrical path extending from the emission driver intersect in the region surrounded by the first curve, the extension line of the first side, and the extension line of the second side.

15. The electronic device of claim 14, further comprising:
a pixel power source electrically coupled with the plurality of pixels; and
a first interconnection wire and a second interconnection wire arranged to surround at least a portion of the active area, the first and second interconnection wires configured to apply a first voltage and a second voltage from the pixel power source to the plurality of pixels, respectively,
wherein a portion of the electrical path extending from at least one of the gate driver or the emission driver, and a portion of the electrical path extending from the source driver intersect within a space disposed between the first curve and the first interconnection wire.
